# EUROPEAN PATENT APPLICATION

(11) **EP 4 668 763 A1**
(43) Date of publication of application: **24.12.2025**
(21) Application number: 24756233.3
(22) Date of filing: 07.02.2024
(51) Int. Cl.: H04N 21/488

(54) **MESSAGE DISPLAY PROCESSING METHOD AND APPARATUS, AND DEVICE AND MEDIUM**

(30) Priority: 17.02.2023 CN 202310181388
(71) Applicant: Beijing Zitiao Network Technology Co., Ltd., Beijing 100190 (CN)
(72) Inventor: ZHANG, Zeqian, Beijing 100028 (CN); WU, Di, Beijing 100028 (CN); WANG, Kang, Beijing 100028 (CN)
(74) Representative: Grünecker Patent- und Rechtsanwälte PartG mbB
(86) International application number: PCT/CN2024/076647
(87) International publication number: WO 2024/169860

(57) **Abstract**

Embodiments of the present disclosure relate to a method, apparatus, device and medium for message display processing. The method comprises: receiving a message viewing operation for a current object; and in response to the message viewing operation, presenting, on a message presentation page, a message prompt card corresponding to a target session message which is a session message between the current object and a target object, wherein a presentation type of the message prompt card is determined based card is determined based on the target object. Thus, user needs are satisfied, and user experience is improved.

## Description

**The** present application claims priority to Chinese Patent Application No. 202310181388.9, titled "Message Display Processing Method, Apparatus, Device, and Medium", filed on February 17, 2023, the contents of which are hereby incorporated by reference in their entireties.

### FIELD

The present disclosure relates to the field of computer application technologies, and in particular, to a method, apparatus, device, and medium for message display processing.

### BACKGROUND

With the development of computer technology, more and more application programs support internal communication within programs, enabling different clients to send and interact related messages within the application. For example, in a short video application, clients may share related messages and the like with each other in the format of private messages.

However, in the related art, the message display methods are relatively simple, and fail to meet user needs, thereby affecting user experience.

### SUMMARY

In order to solve or at least partially solve the aforementioned technical problem, the present disclosure provides a method for message display processing, apparatus, device and medium.

An embodiment of the present disclosure provides a method for message display processing, comprising: receiving a message viewing operation for a current object; and in response to the message viewing operation, presenting, on a message presentation page, a message prompt card corresponding to a target session message which is a session message between the current object and a target object, wherein a presentation type of the message prompt card is determined based card is determined based on the target object.

The embodiment of the present disclosure provides a method for message display processing, comprising: in response to obtaining a message viewing instruction of a current object, obtaining interaction information sent by a target object corresponding to the current object; and generating a message prompt card based on a message prompt card rendering parameter corresponding to the target object and the interaction information, and controlling a message presentation page of the current object to display the message prompt card, wherein the message prompt card rendering parameter corresponding to the target object is used for indicating a presentation type of the message prompt card corresponding to the target object.

An embodiment of the present disclosure further provides an apparatus for message display processing, comprising: a receiving module, configured to receive a message viewing operation for a current object; and a presentation module, configured to, in response to the message viewing operation, display a message prompt card corresponding to a target session message on a message presentation page, the target session message being a session message of the current object and a target object, wherein a presentation type of the message prompt card is determined based on the target object.

An embodiment of the present disclosure further provides an apparatus for message display processing, comprising: an obtaining module, configured to obtain, in response to obtaining a message viewing instruction of a current object, interaction information sent by a target object corresponding to the current object; and a prompt processing module, configured to generate a message prompt card based on a message prompt card rendering parameter corresponding to the target object and the interaction information, and controlling a message presentation page of the current object to display the message prompt card, wherein the message prompt card rendering parameter corresponding to the target object is used for indicating a presentation type of the message prompt card corresponding to the target object.

An embodiment of the present disclosure further provides an electrical device comprising: a processor; and a memory configured to store an executable instruction by the processor, wherein the processor is configured to read the executable instruction from the memory and execute the instruction to implement a method for message display processing according to the embodiment of the present disclosure.

An embodiment of the present disclosure further provides a computer readable storage medium, having a computer program stored thereon, the computer program being configured to execute a method for message display processing according to the embodiment of the present disclosure.

The present disclosure further provides a computer program product, comprising a computer program/instruction, wherein when the computer program/instruction is executed by a processor, the message display processing method in the above embodiments is implemented.

Compared with the prior art, the technical solutions according to the embodiments of the present disclosure have the following advantages:
The message display processing solution according to the embodiment of the present disclosure comprises receiving a message viewing operation for a current object; and in response to the message viewing operation, presenting, on a message presentation page, a message prompt card corresponding to a target session message which is a session message between the current object and a target object, wherein a presentation type of the message prompt card is determined based card is determined based on the target object. Thus, user needs are satisfied, and user experience is improved.

### BRIEF DESCRIPTION OF THE DRAWINGS

In combination with accompanying drawings and with reference to the following description of embodiments, the above and other features, advantages and aspects of various embodiments of the present disclosure will become more apparent. Throughout the drawings, a same or similar reference number represents a same or similar element. It should be understood that the drawings are schematic and that an original and an element are not necessarily drawn to scale.
Fig. 1 is a flowchart of a method for message display processing according to an embodiment of the present disclosure.
Fig. 2 is a schematic diagram of a message display processing scenario according to an embodiment of the present disclosure.
Fig. 3 is a schematic diagram of another message display processing scenario according to an embodiment of the present disclosure.
Fig. 4 is a schematic diagram of another message display processing scenario according to an embodiment of the present disclosure.
Fig. 5 is a schematic diagram of another message display processing scenario according to an embodiment of the present disclosure.
Fig. 6 is a schematic diagram of another message display processing scenario according to an embodiment of the present disclosure.
Fig. 7 is a flowchart of another message display processing method according to an embodiment of the present disclosure.
Fig. 8 is a schematic diagram of another message display processing scenario according to an embodiment of the present disclosure.
Fig. 9 is a schematic diagram of another message display processing scenario according to an embodiment of the present disclosure.
Fig. 10 is a flowchart of another message display processing method according to an embodiment of the present disclosure.
Fig. 11 is a schematic diagram of another message display processing scenario according to an embodiment of the present disclosure.
Fig. 12 is a schematic structural diagram of an apparatus for message display processing according to an embodiment of the present disclosure.
Fig. 13 is a schematic structural diagram of another message display processing apparatus according to an embodiment of the present disclosure.
Fig. 14 is a schematic structural diagram of an electrical device according to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for exemplary purposes and are not intended to limit the protection scope of the present disclosure.

It should be understood that steps described in method embodiments of the present disclosure may be performed in different orders and/or in parallel. Furthermore, the method embodiments may comprise additional steps and/or omit performing illustrated steps. The scope of the present disclosure is not limited in this regard.

As used herein, the term "comprising" and its variations are open-ended inclusion, that is, "comprising but not limited to." The term "based on" is "based at least in part on." The term "one embodiment" means "at least one embodiment"; the term "another embodiment" means "at least one other embodiment"; the term "some embodiments" means "at least some embodiments". Relevant definitions of other terms will be given in the following description.

It should be noted that concepts such as "first" and "second" mentioned in the present disclosure are only used to distinguish different apparatuses, modules or units, and are not used to limit an order or interdependence of functions performed by these apparatuses, modules or units.

It should be noted that modifications of "one" and "a plurality of" mentioned in the present disclosure are schematic rather than restrictive, and those skilled in the art should understand that they should be understood as "one or a plurality of" unless otherwise clearly indicated in the context.

The names of messages or information interacted between a plurality of devices in the embodiments of the present disclosure are only for illustrative purposes, and are not intended to limit the scope of these messages or information.

In order to solve the above problem, the embodiments of the present disclosure provide a method for message display processing. In the embodiments of the present disclosure, a current object may be understood as a message receiver, a target object may be understood as a message sender, and a session message may be any message interacted between the message receiver and the message sender, comprising but not limited to a text message, a video message, etc.

The method is described below with reference to a specific embodiment, where the method is first integrated at a server side.

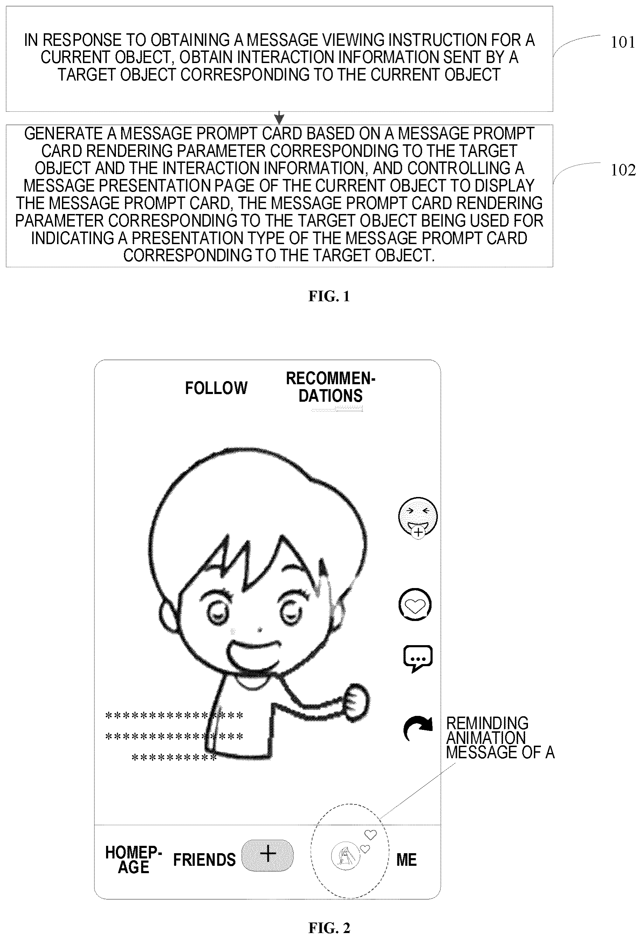

Fig. 1 is a flowchart of a method for message display processing according to an embodiment of the present disclosure. The method may be executed by an apparatus for message display processing which may be implemented by software and/or hardware, and may be generally integrated into an electrical device. As shown in Fig. 1, the method comprises:
Step 101: in response to obtaining a message viewing instruction of a current object, obtaining interaction information sent by a target object corresponding to the current object.

In one embodiment of the present disclosure, a message viewing instruction of a current object is obtained, that is, an instruction for actively viewing a message by the current object is obtained, for example, a message viewing control is displayed in a predetermined menu display area of application's homepage; when it is detected that a corresponding message viewing control on the current object is triggered, a message viewing instruction for the current object is obtained. For another example, an invocation operation by a current object on a predetermined voice instruction input interface is detected, a voice message input on the current object is obtained, and when the voice message comprises a predetermined keyword for message viewing, a message viewing instruction on the current object is obtained.

In response to obtaining a message viewing instruction of a current object, a session message sent by a target object corresponding to the current object is obtained, wherein the session message may be a session message indicating that a new message that has not received by the current object is waiting to be displayed.

In an practical execution process, in order to remind the current object of the presence of a session message that has not viewed currently, etc. , the current object may also be prompted that there is a new message reminder at this time. Therefore, in one embodiment of the present disclosure, before the message viewing instruction of the current object is obtained, in response to receiving a message sending instruction of a target object, reminding animation information set on the current object is obtained, wherein the reminding animation information is a reminding animation corresponding to the target object and defined in advance on the current object. The current object is controlled according to the reminding animation information to display a message prompt corresponding to the target object in the message prompt area, wherein the message prompt area may be an area where a message prompt control required to be set is located on the application.

For example, as shown in Fig. 2, for a target object A, when the reminding animation information set on the current object is "displaying a heart-shaped animation on a platform avatar corresponding to A, " after the session message sent by A to the current object is obtained, the heart-shaped animation of the platform avatar of this target object A may be displayed in a predetermined message prompt area (a lower area of the application interface in the figure), Thus, the current object can intuitively recognize that A has sent a session message, thereby improving the timeliness of viewing related session messages.

Step 102: generating a message prompt card based on a message prompt card rendering parameter corresponding to the target object and the interaction information, and controlling a message presentation page of the current object to display the message prompt card, wherein the message prompt card rendering parameter corresponding to the target object is used for indicating a presentation type of the message prompt card corresponding to the target object.

In one embodiment of the present disclosure, in order to further satisfy the needs of the current object for quick message viewing for a specific target object, a target object may be predetermined, wherein the predetermined target object may be set by the current object as needed, for example, may be a frequently contacted target object set by the current object, etc.

In this embodiment, when the target object belongs to the predetermined target object by the current object, a predetermined message prompt card rendering parameter for the target object may be obtained. That is, in this embodiment, a message sent by the corresponding current object to the target object belonging to the predetermined target object are controlled for message reminding in the format of cards, improving reminding efficiency by means of exposing more information, etc. Furthermore, a corresponding reminding card rendering parameter may be determined for the message prompt card of the target object. For example, different reminding card rendering parameters can be set for different target objects, thereby further improving the effectiveness of subsequently displaying the message prompt card on the current object, and facilitating the quick distinction of session messages sent by different target objects.

The reminding card rendering parameter in the embodiments of the present disclosure can be any rendering parameter used for defining a card style, and is used for defining a visual effect of a session message reminding finally corresponding to the corresponding message sender, wherein the message prompt card rendering parameter corresponding to the target object is used for determining a presentation type of the message prompt card corresponding to the target object.

It should be noted that, in different application scenarios, the method of predetermining a message prompt card rendering parameter sent by a target object are different, and examples are described as follows.

In some possible embodiments, a card rendering parameter setting instruction of a current object for a target object is obtained, wherein the card rendering parameter setting instruction may be obtained by triggering a predetermined card setting control on the current object, may also be obtained by obtaining an input voice message containing a predetermined card setting keyword on the current object, and the like.

In response to obtaining a card rendering parameter setting instruction of a current object for a target object, a plurality of candidate card rendering parameters are displayed on the current object, and a candidate card rendering parameter selected by the current object from the plurality of candidate card rendering parameters is obtained as the message prompt card rendering parameter. That is, in this embodiment, the reminding card rendering parameter of the target object can be customized by the current object as needed.

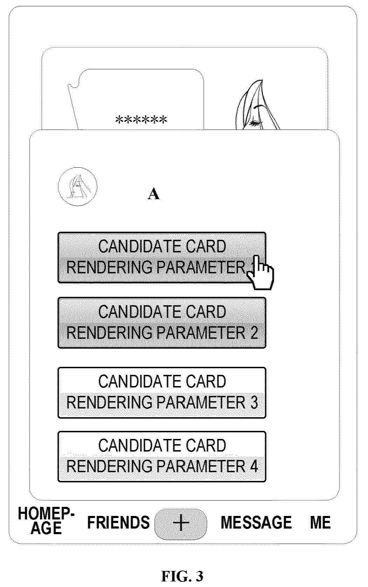

For example, as shown in Fig. 3, in response to obtaining the card rendering parameter setting instruction of the current object for the target object A, a plurality of candidate card rendering parameters 1, 2, 3 and 4, etc., are displayed on the current object, and the candidate card rendering parameters 1 and 2 selected by the current object from the plurality of candidate card rendering parameters are obtained, these candidate card rendering parameters 1 and 2 are used as the target reminding card rendering parameters of A, so as to generate the message prompt card of the session message sent by A based on the target card rendering parameters 1 and 2.

In one embodiment of the present disclosure, the message prompt card is generated based on the rendering parameter of the message prompt card and the interaction information, and the message presentation page of the current object is controlled to display the message prompt card. Thus, on the one hand, an interaction message sent by a corresponding current object is rendered by using the message prompt card rendering parameter, and when session messages sent by different target objects are contained, the session messages sent by the different target objects can be intuitively distinguished. On the other hand, the session message sent by the associated message sender is displayed in the format of a message prompt card, and since the card has a larger area than a list unit of a message list, more information can be exposed, and the reading efficiency of interaction messages can be further improved.

In some possible embodiments, the message prompt card comprises the corresponding session message in addition to the corresponding card style. Therefore, in order to further improve the presentation effect of the interaction message, when the message prompt card is generated based on the message prompt card rendering parameter and the session message, a card rendering style parameter is determined based on the card rendering parameter determination message. In some embodiments, the card rendering style parameter may comprise any parameter information related to the card style, such as a color, a size, a shape, and a display position, etc. of the card, which may be set on the current object itself.

In some embodiments, the message rendering style parameter corresponding to the session message is determined based on the card rendering parameter. The message rendering style parameter is used for determining a presentation style of the corresponding interaction information, and comprises but is not limited to a display font, a display frame style, a display size, a display information type (for example, comprising the name and avatar of the target object), a display position in corresponding card and the like corresponding to different session messages, Thus, the message prompt card is generated based on the card rendering style parameter and the message rendering style, and the generated message prompt card has diverse and intuitive visual effects.

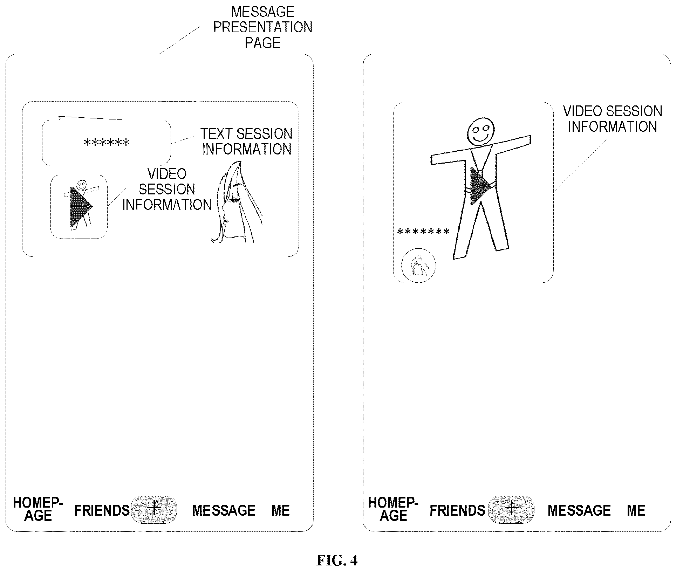

For example, for the interaction information sent by a target object "K", if the sent interaction information comprises text interaction information and video interaction information corresponding to the text session message, the message prompt card may in the format of chat, as shown in the left diagram of Fig. 4, that is, the corresponding text interaction information and the video interaction information are both displayed in the style of chat information, with the video interaction information displayed in the format of a video thumbnail. Alternatively, the message prompt card may be directly displayed in the style of a video stream, as shown in the right diagram of Fig. 4, with a corresponding text session message and the like displayed on the video stream interface.

In one embodiment of the present disclosure, in order to further prevent the current object from missing important session messages, and ensure timely viewing of session message sent by some specific target objects that belong to the predetermined current object, display priorities of a plurality of target objects that belong to the predetermined current object may also be divided. In this embodiment, predetermined display priorities of a plurality of target objects are determined, wherein the display priorities may be predetermined by the current object or the like, and in a descending order of the display priorities, the current object is controlled to display, on the message presentation page, a plurality of message prompt cards corresponding to the plurality of target objects.

Here, when the current object is controlled to display, on the message presentation page, a plurality of message prompt cards corresponding to the plurality of target objects in the descending order of the display priorities, if the message presentation page displays session messages sent by a plurality of target objects vertically, the message prompt card corresponding to the target object with the highest display priority is displayed at the top. If the message presentation page displays the session messages sent by a plurality of target objects horizontally, a message prompt card corresponding to the target object with the highest display priority is displayed on the left. In the message presentation page in this embodiment, the message prompt cards corresponding to the plurality of target objects may be displayed vertically or horizontally, and may also be displayed in a briefing style, displayed in a format of dual streams with left and right message columns, etc. Regardless of the display format, the corresponding display positions corresponding to the display priorities from high to low can be predefined, which will not be enumerated here.

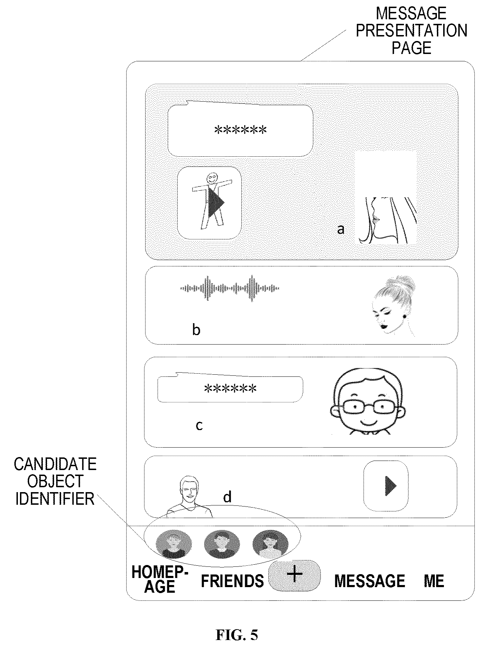

For example, as shown in Fig. 5, in response to obtaining a message viewing instruction of the current object, the session messages of predetermined target objects a, b, c, d that belong to the current object are obtained, and the message prompt cards of a, b, c, and d are generated respectively based on the predetermined message card prompt rendering parameters of a, b, c, and d. If the display priorities are respectively a, b, c and d from high to low, the message presentation page of the current object is controlled to display the message prompt cards of a, b, c and d from top to bottom. Each message prompt card in the figure may display more session messages, for example, display specific content of more session messages, improving the reading efficiency of the session messages.

In one embodiment of the present disclosure, in order to further improve the reading efficiency of the message, when the interaction information comprises a plurality of video session messages, the current object is controlled to display a video stream presentation container corresponding to the plurality of video session messages in the predetermined presentation area of the message presentation page. The plurality of video session messages corresponding to different target objects may correspond to different video stream presentation containers, and the video stream presentation corresponding to each target object easily contains a plurality of video session messages sent by the same target object.

Furthermore, in response to a trigger operation for the video stream presentation container on the current object, the video stream composed of a plurality of video session messages corresponding to the video presentation container is entered, and a plurality of video session messages can be quickly switched based on a switching operation on the video stream, wherein the video stream presentation containers corresponding to different target objects may be arranged in a sequential order according to display priorities. Thus, after the display of the video session message sent by the current target object is completed, if a switching operation of the current object is obtained, the next video stream display container corresponding to the next target object is further switched to display the video stream and the like corresponding to the video session messages sent by the next target object. Thus, in this embodiment, the video session messages can be quickly viewed without entering the interaction interface corresponding to the target object.

In an practical execution process, sender identification information (comprising, but not limited to, one or more of name information, avatar information and the like of the corresponding target object) of a target object that has sent a plurality of interaction video stream messages and other information, such as the total number of the plurality of video session messages sent by all target objects may be further displayed in a predetermined presentation area, that is, more information may be leaked out of the predetermined presentation area.

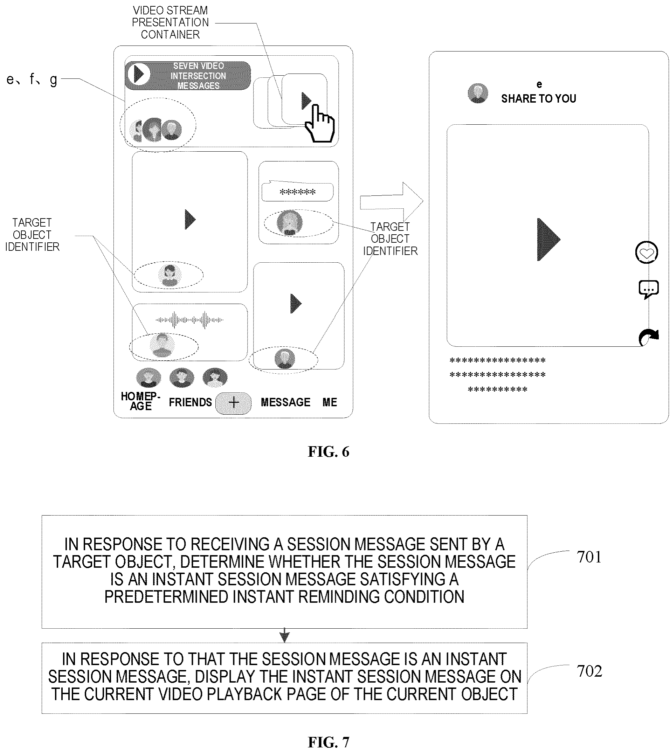

For example, as shown in Fig. 6, when the session messages sent by the predetermined target objects e, f, g that belong to the predetermined target object comprise a total of seven video session messages, the total number of video session messages, and the avatar information and video stream presentation containers corresponding to e, f and g may be displayed in a predetermined presentation area of the message presentation page (an upper area of the message presentation page in the figure). When the trigger operation by the current object for the video stream presentation container is detected, as shown in Fig. 6, the video stream corresponding to the video session message sent by the e, which has the highest priority, is preferentially displayed, upon receiving the switching operation on the video stream by a message receiving section, a video session message sent by the next e is switched to. If the last video session message sent by e is currently displayed, a video stream presentation corresponding to f, which has the next display priority, to display a video session message sent by f is easily switched to, and thus the video session message can be viewed quickly. The message prompt card corresponding to each target object shown in the figure further comprises a target object identifier of a target object corresponding to the message prompt card, so as to indicate the target object corresponding to the corresponding message prompt card.

Certainly, in a practical execution process, other types of session messages may be stored and displayed in a presentation container format, which will not be enumerated here.

In some embodiments of the present disclosure, for some target objects do not belong to the predetermined target object, for example, a common target object predetermined for the current object, the current object may be controlled to display only simple prompt information of the session message sent by the common target object in a predetermined area (for example, the lower area in Fig. 5) of the message presentation page, for example, to display only the number of session messages sent by the common target object, and/or the corresponding target object avatars.

In conclusion, the message display processing method of the embodiment of the present disclosure, comprises: obtaining a message viewing instruction of a current object, obtaining interaction information sent by a target object corresponding to the current object; and generating a message prompt card based on a message prompt card rendering parameter corresponding to the target object and the interaction information, and controlling a message presentation page of the current object to display the message prompt card, wherein the message prompt card rendering parameter corresponding to the target object is used for indicating a presentation type of the message prompt card corresponding to the target object. Thus, user needs are satisfied, and user experience is improved.

Based on the foregoing embodiment, in a practical execution process, in order to further improve efficiency of processing session messages, in response to that a current object does not actively view session messages, corresponding session messages may be actively and displayed in real time for some instant session messages.

In one embodiment of the present disclosure, as shown in Fig. 7, the method further comprises:
Step 701, in response to receiving a session message sent by a target object, determining whether the session message is an instant session message satisfying a predetermined instant reminding condition.
Step 702, in response to that the session message is an instant session message, presenting the instant session message on the current video playback page of the current object.

In one embodiment of the present disclosure, in response to receiving an instant session message sent by a target object, it is determined whether the instant session message satisfies a predetermined instant reminding condition, i. e., in this embodiment, in order to avoid frequently interrupting the use of the application program by the current object, an instant reminding is only performed for a session message satisfying the predetermined instant reminding condition. That is, in response to that the session message is an instant session message, the instant session message is displayed on the current video playback page of the current object. For example, when the current object is online in the interaction application, if the corresponding instant reminding message is obtained, the instant session message is directly displayed on the current video playback page.

Alternatively, in order not to interrupt the use of the current video playback page, in one embodiment of the present disclosure, the current object is controlled to display the corresponding target session message on the switched video playback page after switching from the first video being watched on the current video playback page.

In different application scenarios, the methods of determining whether a session message is an instant session message satisfying a predetermined instant reminding condition are different. The examples are described as follows.

In some possible embodiments, a predetermined instant reminding target object of the current object is obtained, and it is determined whether the target object belongs to the predetermined instant reminding target object; and when the target object belongs to the instant reminding target object, the session message is considered to satisfy the predetermined instant reminding condition, i. e., belongs to the instant session message. That is, in this embodiment, the instant message reminding is performed for a specific target object.

In some possible embodiments, it is determined whether the current object belongs to the above predetermined target object; if the current object belongs to the predetermined target object, a message type of a session message of the session message is identified; and when the current object belongs to the predetermined session message type, the session message is considered to satisfy the predetermined instant reminding condition, i. e., belongs to the instant session message. That is, in this embodiment, an instant reminding is made for some specific session messages, where the predetermined session message type may be identified by the system or defined by the current object.

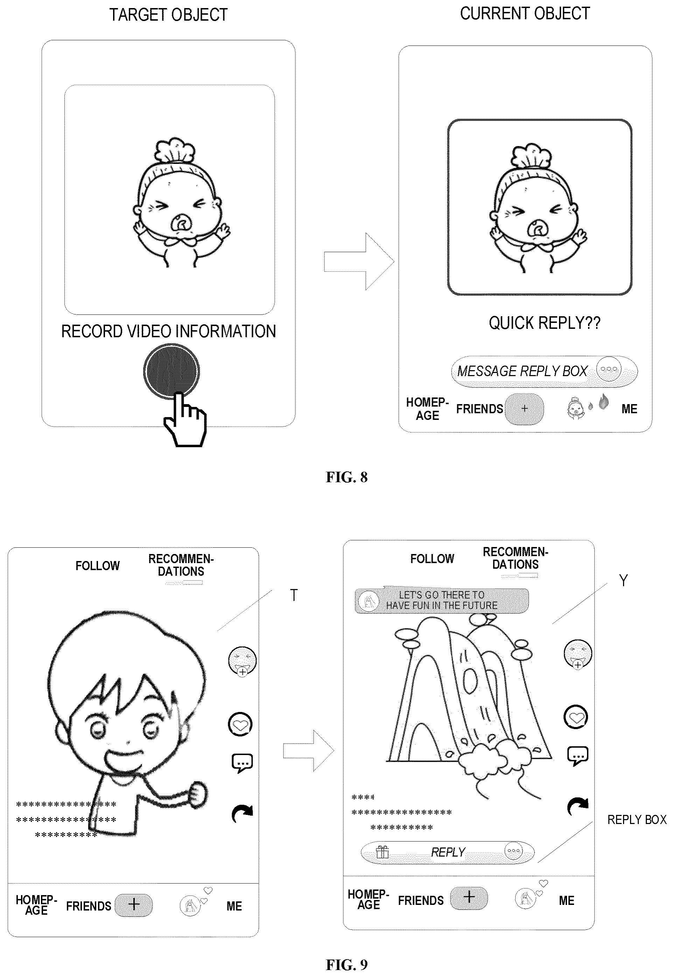

In addition, in this embodiment, the instant message comprises at least one of a recorded video message recorded on the target object, a video sharing message shared with the target object, and a chat message of the target object, where the recorded video message may be generated by recording a predetermined video recording control after the video recording control is invoked for the target object, For example, as shown in Fig. 8, the recorded video message may comprise recorded object video information recorded by a target object and an added text message.

In practical execution process, in order to further prompt that the session message corresponding to the current object is an instant session message, the reminding animation information corresponding to the instant message may also be displayed on the current object. For example, after obtaining the instant session message sent by A to the current object, an urgent reminding animation of the platform avatar of the target object A may be displayed in a predetermined message prompt area (for example, a lower area of the application interface), Thus, the current object can intuitively recognize that A currently sends an instant session message, which is conducive to improving the timeliness of viewing related session messages.

In some possible embodiments, the message prompt card corresponding to the target object sending the instant message may also be displayed in a predetermined urgent reminding animation. For example, the message prompt card corresponding to the target object sending the instant message is controlled to be displayed in a "shaking" animation effect on the message presentation page.

In some possible embodiments, in order to further improve the efficiency of replying to the instant session message, a reply box of the instant session message may also be directly displayed on the current video playback page, so that the current object replies to the instant session message in the reply box. Certainly, in any scenario where the session message sent by the predetermined target object is entered, a reply box may be displayed on the session message interface. For example, when the foregoing video session message sent by the target object is displayed in the format of a video stream, a reply box for a message sending segment may be displayed on a corresponding video interaction interface, so as to quickly reply to a corresponding message client.

For example, as shown in Fig. 9, when the current object is viewing a video T, if an instant session message sent by the target object "K " corresponding to the current object is obtained and the instant message is the shared video Y and the corresponding shared text message sent by the target object "K", the video T is directly switched to Y, and the shared text message "Let's go here next time" sent by "K" is displayed on Y, and a reply box for "K" is displayed on the video playback interface of Y. Thus, the current object can directly reply to the instant session message on the video playback interface of Y.

In conclusion, based on the message display processing method in the embodiments of the present disclosure, in response to receiving a session message sent by a target object, it is determined whether the session message is an instant session message satisfying a predetermined instant reminding condition; and in response to that the session message is an instant session message, the instant session message is displayed on the current video playback page of the current object. In the embodiments of the present disclosure, instant reminding of some session messages satisfying conditions may be realized, which further improves the efficiency of viewing the session messages, and enriches the presentation forms of the session messages.

Next, the message display processing method based on the embodiment of the present disclosure will be described focusing on the side where the object is located.

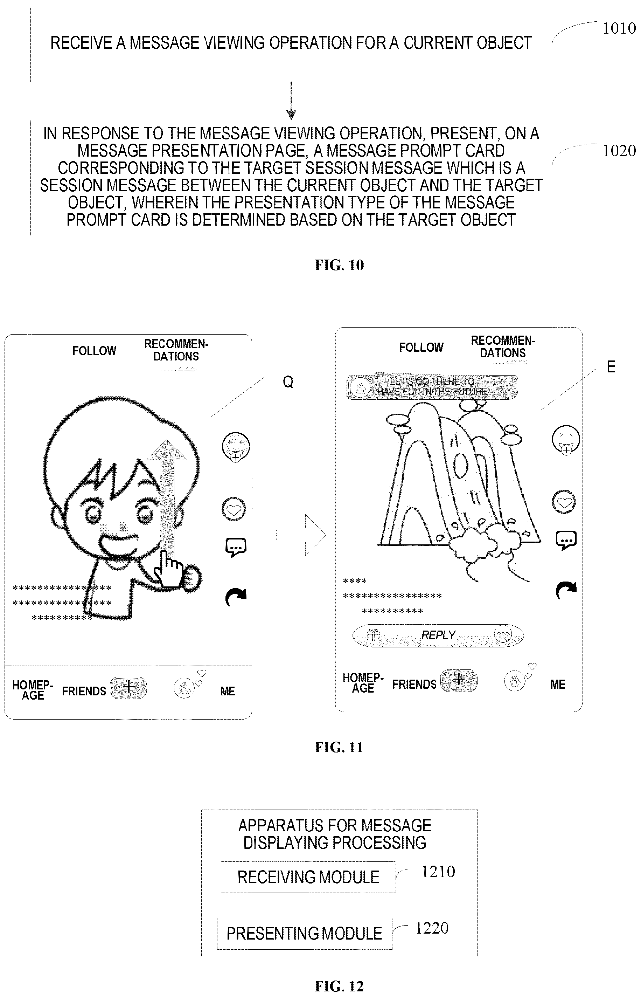

Fig. 10 is a flowchart of a method for message display processing according to the embodiment of the present disclosure. The method may be executed on a client, and may specifically be executed on an apparatus for message display processing integrated on an electrical device on which a corresponding object is located. As shown in Fig. 10, the method comprises:
Step 1010, receiving a message viewing operation for a current object.
   In one embodiment of the present disclosure, a message viewing control may be displayed in a predetermined menu display area of application's homepage; when it is detected that a corresponding message viewing control is triggered on a current object, a message viewing operation on the current object is received; For another example, an invocation operation of a current object on a predetermined voice instruction input interface is detected, a voice message input on the current object is obtained, and when the voice message comprises a predetermined keyword for viewing the message, a message viewing operation on the current object is obtained. The current object may be a user that currently performs a message viewing operation, and may also be referred to as a current user.
Step 1020, in response to the message viewing operation, presenting, on a message presentation page, a message prompt card corresponding to the target session message which is a session message between a current object and the target object, wherein the presentation type of the message prompt card is determined based on the target object.

In one embodiment of the present disclosure, in response to a message viewing operation, a message prompt card corresponding to the target session message is displayed on a message presentation page, the target session message is a session message between a current object and a target object, and the target session message may comprise a message received by the current object recently/newly from the target object, or at least one unread most recent/latest message by the current object from the target object, or a call request message from a target object that the current object is receiving; The presentation type of the message prompt card is determined based on the target object, that is, the message prompt card is definable by the target object.

In some possible embodiments, at least one associated object corresponding to the current object may be displayed, where the at least one associated object comprises the target object, the associated objects may be understood as objects related to the current object, and may also be referred to as associated users, such as a friend of the current object. The target object may be any one or more objects among the at least one associated object, and the target user may also be referred to as a target user.

In some possible embodiments, the presentation type of the message card of the target object may be predetermined by the current object. In response to setting operation (or update operation) on the target object card, a card setting panel is displayed, wherein the card setting panel may comprise various card type options. The card type option may be set according to according to the needs of the scenario, for example, type templates may be presented for different cards, for another example, may be various candidate card rendering parameters as shown in the above Fig. 2, so that a presentation type of a message prompt card corresponding to the target object may be set on the card setting panel. The candidate card rendering parameter determines a presentation type of the message prompt card. That is, in this embodiment, in response to a selection performed on a current object for a target card type option among at least one card type option, a card type corresponding to the target card type option is used as the presentation type of the message prompt card corresponding to the target object. The at least one card type option may comprise a large card, a medium card, a small card, a rectangular card, a square card, etc. A presentation type of the message prompt card is determined according to a target object. For example, the message prompt card of a target object A is a large card presentation type, and a message prompt card of a target object B is a small card presentation type.

In one embodiment of the present disclosure, a message prompt card corresponding to that least one target object is displayed in a first area of the message presentation page, and based on a trigger operation of a current object for any message prompt card, a message detail page corresponding to the corresponding prompt card can be displayed. In one embodiment of the present disclosure, each target object may correspond to one message prompt card, and message prompt cards corresponding to different target objects may be the same or different. In addition, message prompt cards corresponding to different target objects may be displayed according to a double-column stream or a single-column stream. The message prompt card may display an object identifier of the target object, at least part of message content of a message sent by the target object, and a message type (for example, a video type message or a text message) of the message sent by the target object. The message detail page may be a detail page of a session message between the current object and the target object.

In one embodiment of the present disclosure, when there are many session messages or when the message prompt card cannot fully display the session message, for example, as shown in Fig. 3, when the session message comprises a video session message, and specific video content corresponding to the video session message cannot be known, the message detail page corresponding to the prompt card may be displayed based on the trigger operation for any prompt card. The specific content of the message corresponding to the target session is displayed on the message detail page, for example, an aggregation page of the corresponding session message is displayed, thereby improving the display efficiency of session messages.

In one embodiment of the present disclosure, a candidate object identifier of at least one candidate object may be further displayed in a second area of the message presentation page. The candidate object identifier may be any information that can identify the candidate object, such as an image or an icon of the candidate object. In response to a trigger operation for any candidate object identifier on the current object, a message detail page corresponding to the candidate object identifier corresponding to the trigger operation may be displayed, that is, in this embodiment, the display of the message detail page may also be triggered by triggering the candidate object identifier, ensuring quick view of the session messages related to the candidate object. The candidate objects may be other objects than the target object among the at least one associated object, and may also be referred to as candidate users.

In some embodiments, if the message prompt corresponding to the any associated object is set to prompt in a format of a message prompt card, the any associated object is updated from the candidate object to the target object. If the message prompt corresponding to the any associated object is set to cancel prompting in the format of a message prompt card, the any associated object is updated to a candidate object by using the target object. In other embodiments, the target object may also not be limited to an object configured to prompt a message by means of a message prompt card.

In one embodiment of the present disclosure, the second area may be a bottom bar area of a message presentation page, the candidate object identifier may be an image identifier of a candidate object, and candidate object identifiers of at least one candidate object may be displayed in a format of a list in the second area. When the current object receives a message sent by the candidate object, a message prompt bubble may be displayed at an associated position of the candidate object identifier. The first area may be an area other than the second area.

Likewise, in a practical execution process, in order to further improve efficiency of processing session messages, corresponding session messages may also be displayed in an active and real-time manner for some instant session messages when a current object does not actively view the session messages.

That is, in one embodiment of the present disclosure, when the video playback page is displayed, the first video being watched by the current object is played on the video playback page, and in response to that a target session message is received, in response to a video switching operation, a target session message is played on a video playback page, wherein the video switching operation may be any pre-calibrated operation information for identifying video switching, such as an up-down sliding operation on a video playback page. In this embodiment, in order not to interrupt the video being viewed by the user, after the video switching operation is responded, the target session message is directly displayed on the video playback page, thereby effectively reminding the user of some instant session messages.

For example, as shown in Fig. 11, when the target session message is a shared video Q and a corresponding shared text message sent by a target object "K", the shared video Q and the corresponding shared text message may be played on a video playback page after the current object performs a video switching operation (an upward slide operation in the figure) on a video E currently being watched.

In some embodiments, a video playback page may be displayed on which a first video is played; in response to that a target session message is received, the target session message is played on the video playback page in response to the video switching operation. In some embodiments, playing the target session message on the video playback page comprises: playing, on the video playback page, a second video corresponding to the target session message, the second video being generated based on the target session message and a predetermined video template. That is to say, the second video can be generated based on the target session message and the predetermined video template. Thus, when a current object is watching a video and triggers the video switching (for example, when the video is switched by sliding upwards), the second video is taken as a next video to be played, thereby reminding a user of viewing the session message in time. The predetermined video template may be set according to the needs of the scenario. In some optional embodiments, the predetermined video template may display a target session message in a video-dynamic manner, so that a restriction that only a target session message of a video type can be displayed on a video playback page is broken, and further achieving quick reminders for various types of target session messages.

In one embodiment of the present disclosure, in order to further prevent the current object from missing important session messages, ensuring that session messages sent to specific target objects that belong to the predetermined current object are viewed in time, display priorities may also be divided for a plurality of target objects that belong to the predetermined current object. In this embodiment, in response to that there are a plurality of target objects, a session message of each target object and a current object corresponds to a message prompt card, the message prompt card corresponding to the target session message is displayed on the message presentation page according to a set priority.

Here, when a plurality of message prompt cards corresponding to the plurality of target objects are displayed on the message presentation page in descending order of display priorities, if the message display page displays the session messages sent by multiple target objects in a vertical direction, the message prompt card corresponding to the target object with a higher priority is displayed at the top. If the message presentation page displays session messages sent by a plurality of target objects horizontally, a message prompt card corresponding to the target object with a highest display priority is displayed on the leftmost side. In conclusion, the message display processing method in the embodiments of the present disclosure comprises: receiving a message viewing operation for a current object; in response to the message viewing operation, presenting, on a message presentation page, a message prompt card corresponding to the target session message which is a session message between the current object and the target object, wherein the presentation type of the message prompt card is determined based on the target object. In the embodiments of the present disclosure, user needs are met, and user experience is improved.

In order to implement the above embodiments, the present disclosure further provides an apparatus for message display processing.

Fig. 12 is a schematic structural diagram of an apparatus for message display processing according to the embodiment of the present disclosure. The apparatus can be implemented by software and/or hardware, and can generally be integrated into an electrical device to perform message display processing. As shown in Fig. 12, the apparatus comprises:
a receiving module 1210 is configured to receive a message viewing operation for a current object;
a presentation module 1220, configured to, in response to the message viewing operation, present a message prompt card corresponding to a target session message on a message presentation page, the target session message being a session message between the current object and a target object, wherein a presentation type of the message prompt card is determined based on the target object. In order to implement the above embodiments, the present disclosure further provides an apparatus for message display processing.

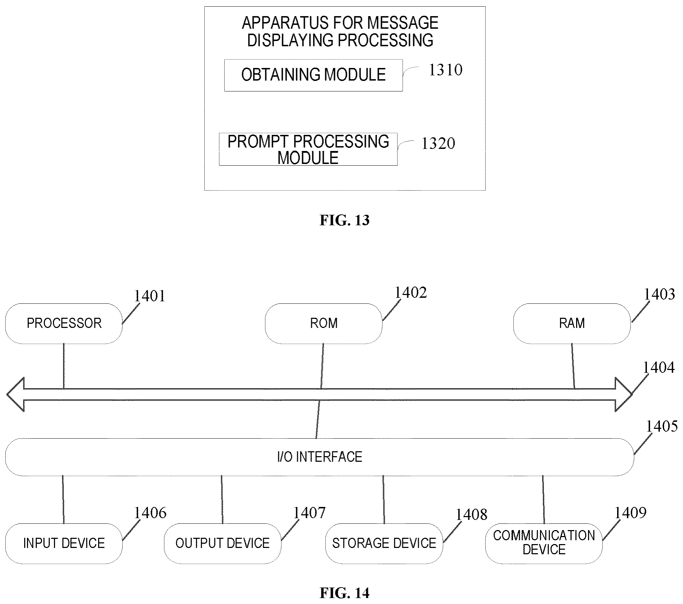

Fig. 13 is a schematic structural diagram of an apparatus for message display processing according to the embodiment of the present disclosure. The apparatus may be implemented by software and/or hardware, and may be generally integrated into an electrical device to perform message display processing. As shown in Fig. 13, the apparatus comprises:
an obtaining module 1310, configured to acquire, in response to obtaining a message viewing instruction of a current object, interaction information sent by a target object corresponding to the current object;
a prompt processing module 1320, configured to generate a message prompt card based on the message prompt card rendering parameter and the interaction information corresponding to the target object, and controlling the message presentation page of the current object to display the message prompt card, wherein the message prompt card rendering parameter corresponding to the target object is used for indicating the presentation type of the message prompt card corresponding to the target object.

The message display processing apparatus according to the embodiment of the present disclosure can execute the message display processing method according to any embodiment of the present disclosure, and has corresponding functional modules for executing the method and beneficial effects. The execution principle thereof is similar, and will not be described herein again.

In order to implement the above embodiments, the present disclosure further provides a computer program product, comprising a computer program/instruction. When the computer program/instruction is executed by a processor, the message display processing method in the above embodiments is implemented.

Fig. 14 is a schematic structural diagram of an electrical device according to an embodiment of the present disclosure.

Referring now specifically to Fig. 14, there is shown a block diagram of an electrical device 1400 suitable for use in implementing embodiments of the present disclosure. The electrical device 1400 In one embodiment of the present disclosure may comprise, but is not limited to, a mobile terminal such as a mobile phone, a laptop computer, a digital broadcast receiver, a PDA (Personal Digital Assistant), a PAD (tablet computer), a PMP (Portable Multimedia Player), an in-vehicle terminal such as an in-vehicle navigation terminal, and the like, and a fixed terminal such as a digital TV, a desktop computer, and the like. The electrical device shown in Fig. 14 is merely an example and should not bring any limitation to the functions and scope of use of the embodiments of the present disclosure.

As shown in Fig. 14, electrical device 1400 may comprise a processor (e. g., central processor unit, graphics processor, etc. ) 1401 that may perform various suitable animations and processes in accordance with programs stored in read only memory (ROM) 1402 or programs loaded from storage device 1408 into random access memory (RAM) 1403. In the RAM 1403, various programs and data required for the operation of the electrical device 1400 are also stored. The processor 1401, the ROM 1402, and the RAM 1403 are connected to each other through a bus 1404. An input/output (I/O) interface 1405 is also connected to the bus 1404.

In general, the following devices may be connected to the I/O interface 1405: input devices 1406 comprising, for example, a touch screen, touch pad, keyboard, mouse, camera, microphone, accelerometer, gyroscope, and the like; an output device 1407 comprising, for example, a liquid crystal display (LCD), a speaker, a vibrator, etc. ; a storage device 1408 comprising, for example, a magnetic tape, a hard disk, etc.; and a communication device 1409. The communication device 1409 may allow the electrical device 1400 to wirelessly or wire communicate with other devices to exchange data. While Fig. 14 illustrates an electrical device 1400 with a variety of devices, it should be understood that it is not required that all of the illustrated devices be implemented or provided. More or fewer devices may alternatively be implemented or provided.

In particular, the processes described above with reference to the flowcharts can be implemented as computer software programs in accordance with embodiments of the present disclosure. For example, embodiments of the disclosure comprise a computer program product comprising a computer program carried on a non-transitory computer-readable medium, the computer program comprising program code for performing the method as shown in the flowchart. In such an embodiment, the computer program may be downloaded and installed from the network via communications device 1409, from storage device 1408, or from ROM 1402. When the computer program is executed by the processor 1401, the above-described functions defined in the message display processing method based on the embodiment of the present disclosure are performed.

It should be noted that the computer readable medium in the present disclosure may be a computer readable signal medium or a computer readable storage medium, or any combination thereof. A computer-readable storage medium may be, for example, but not limited to, an electronic, magnetic, optical, electromagnetic, infrared, or semiconductor system, apparatus, or device, or any suitable combination of the foregoing. More specific examples of the computer readable storage medium may comprise, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain or store a program for use by or in connection with an instruction execution system, apparatus, or device. While in the present disclosure, a computer readable signal medium may comprise a propagated data signal with computer readable program code embodied therein, for example, in baseband or as part of a carrier wave. Such a propagated signal may take any of a variety of forms, comprising, but not limited to, electro-magnetic, optical, or any suitable combination thereof. A computer readable signal medium may also be any computer readable medium that is not a computer readable storage medium and that can communicate, propagate, or transport a program for use by or in connection with an instruction execution system, apparatus, or device. Program code embodied on a computer readable medium may be transmitted using any appropriate medium, comprising, but not limited to, wireline, optical fiber cable, RF (radio frequency), etc. , or any suitable combination of the foregoing.

In some embodiments, clients, servers can communicate using any currently known or future developed network protocol such as HTTP (Hypertext Transfer Protocol) and can be interconnected with digital data communication (e. g., a communication network) in any format or medium. Examples of communication networks comprise a local area network ("LAN"), a wide area network ("WAN"), an internetwork (e. g., the Internet), and a peer-to-peer network (e. g., an ad hoc peer-to-peer network), as well as any currently known or future developed network.

The computer readable medium may be comprised in the electrical device, or may exist separately and not be installed in the electrical device.

The computer readable medium bears one or more programs. When the one or more programs are executed by the electrical device, the electrical device is enabled to: in response to the message viewing operation, present a message prompt card corresponding to a target session message on a message presentation page, the target session message being a session message between the current object and a target object, wherein a presentation type of the message prompt card is determined based on the target object; or acquire, in response to obtaining a message viewing instruction of a current object, interaction information sent by a target object corresponding to the current object, and generating a message prompt card based on the message prompt card rendering parameter and the interaction information corresponding to the target object, and controlling the message presentation page of the current object to display the message prompt card, wherein the message prompt card rendering parameter corresponding to the target object is used for indicating the presentation type of the message prompt card corresponding to the target object. Thus, user needs are met, and the user experience is improved. An electrical device can write computer program codes for executing operations of the present disclosure in one or more programming languages or a combination thereof. The programming languages comprise, but are not limited to, an object-oriented programming language, such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, comprising a local area network (LAN) or a wide area network (WAN), or the connection may be made to an external computer (for example, through the Internet using an Internet Service Provider).

The flowchart and block diagrams in the Figures illustrate the architecture, functionality, and operation of possible embodiments of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative embodiments, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments of the present disclosure may be implemented through software or hardware. The name of a unit does not constitute a limitation to the unit itself in a certain case.

The functions described herein above may be performed, at least in part, by one or more hardware logic components. For example, without limitation, exemplary types of hardware logic components that can be used comprise Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

In the context of this disclosure, a machine-readable medium may be tangible media that may contain or store a program for use by or in connection with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combination of the foregoing. More specific examples of machine-readable storage media would comprise an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the foregoing.

The foregoing description is merely illustrative of the preferred embodiments of the present disclosure and of the technical principles applied thereto, as will be appreciated by those skilled in the art, The disclosure of the present disclosure is not limited to the technical solution formed by the specific combination of the above technical features, At the same time, it should also cover other technical solutions formed by any combination of the above technical features or equivalent features thereof without departing from the above disclosed concept. For example, the above features and technical features having similar functions disclosed in the present disclosure (but not limited thereto) are replaced with each other to format a technical solution.

In addition, while operations are depicted in a particular order, this should not be understood as requiring that the operations be performed in the particular order shown or in sequential order. Multitasking and parallel processing may be advantageous in certain circumstances. Likewise, while several specific execution details are comprised in the above discussion, these should not be construed as limiting the scope of the present disclosure. Certain features that are described in the context of separate embodiments can also be implemented in combination in a single embodiment. Conversely, various features that are described in the context of a single embodiment can also be implemented in a plurality of embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for message display processing, comprising:
receiving a message viewing operation of for a current object;
in response to the message viewing operation, presenting, on a message presentation page, a message prompt card corresponding to a target session message which is a session message between the current object and a target object, wherein a presentation type of the message prompt card is determined based on the target object.

2. The method of claim 1, further comprising:
displaying at least one associated object corresponding to the current object;
in response to a card setting operation for a target object among the at least one associated object, displaying a card setting panel to set a presentation type of the message prompt card corresponding to the target object.

3. The method of claim 2, wherein there is at least one card type option displaying on the card setting panel;
wherein the method further comprises: in response to a selection for a target card type option among the at least one card type option, determining a card type corresponding to the target card type option as a presentation type of the message prompt card corresponding to the target object.

4. The method of claim 1, further comprising:
displaying a video playback page which a first video is playing on; and
in response to receiving a target session message, in response to a video switching operation, playing the target session message on the video playback page.

5. The method of claim 4, wherein playing the target session message on the video playback page comprises:
playing a second video corresponding to the target session message on the video playback page, the second video being generated based on the target session message and a predetermined video template.

6. The method of claim 1, wherein
at least one message prompt card corresponding to the target object is presented in a first area of the message presentation page; in response to a trigger operation for any prompt card, a message detail page corresponding to the any prompt card is displayed; and/or
wherein at least one candidate object identifier is presented in a second area of the message presentation page; in response to a trigger operation for an object identifier, a message detail page corresponding to the any candidate object identifier is displayed.

7. The method of claim 1, wherein the target session message comprises:
a message most recently received by the current object from the target object;
at least one unread message received by the current object from the target object; or
a call request message being received by the current object from the target object.

8. The method of claim 1, wherein in response to that there is a plurality of target objects, a session message of each target object with the current object corresponds to one message prompt card, the method further comprises:
receiving a display priority setting operation for the plurality of message prompt cards;
displaying a message prompt card corresponding to the target session message on a message presentation page comprises: displaying a message prompt card corresponding to a target session message on the message presentation page according to a setting priority.

9. A method for message display processing, comprising:
in response to obtaining a message viewing instruction for a current object, obtaining interaction information sent by a target object corresponding to the current object;
generating a message prompt card based on a message prompt card rendering parameter corresponding to the target object and the interaction information, and controlling a message presentation page of the current object to display the message prompt card, the message prompt card rendering parameter corresponding to the target object being used for indicating a presentation type of the message prompt card corresponding to the target object.

10. The method of claim 9, further comprising:
obtaining a message prompt card rendering parameter corresponding to the target object;
correspondingly obtaining a predetermined message prompt card rendering parameter of the target object comprises:
in response to receiving a card rendering parameter setting instruction of the current object for the target object, obtaining a message prompt card rendering parameter of the target object.

11. The method of any one of claims 9 to 10, wherein in response to that there is a plurality of target objects, a session message of each target object with the current object corresponds to one message prompt card;
wherein controlling a message presentation page of the current object to display the message prompt card comprises: controlling the current object to display, on the message presentation page according to a predetermined priority, a plurality of the message prompt cards corresponding to the plurality of the target objects.

12. An apparatus for message display processing, comprising:
a receiving module configured to receive a message viewing operation for a current object; and
a presenting module configured to in response to the message viewing operation, present a message prompt card corresponding to a target session message on a message presentation page, the target session message being a session message between the current object and a target object, wherein a presentation type of the message prompt card is determined based on the target object.

13. An apparatus for message display processing, comprising:
an obtaining module configured to in response to obtaining a message viewing instruction of a current object, obtain interaction information sent by a target object corresponding to the current object;
a prompt processing module configured to generate a message prompt card based on a message prompt card rendering parameter and the interaction information corresponding to the target object, and control the message presentation page of the current object to display the message prompt card, the message prompt card rendering parameter corresponding to the target object being used for indicating a presentation type of the message prompt card corresponding to the target object.

14. An electrical device, comprising:
a processor; and
a memory configured to store processor-executable instructions,
wherein the processor is configured to read the executable instructions from the memory and execute the executable instructions to implement the message display processing method according to any one of claims 1 to 11.

15. A computer-readable storage medium, wherein the computer-readable storage medium stores a computer program, and the computer program is used for executing the message display processing method according to any one of claims 1 to 11.

16. A computer program product, comprising a computer program or a computer instruction, wherein when the computer program or the computer instruction is executed by a processor, the message display processing method according to any one of claims 1 to 11 is executed.
